# FASCICULE DE BREVET EUROPEEN

(11) **EP 2 763 885 B1**
(45) Date de publication et mention de la délivrance du brevet: **06.01.2016**
(21) Numéro de dépôt: 12741038.9
(22) Date de dépôt: 04.07.2012
(51) Int. Cl.: B62D 25/14

(54) **AGENCEMENT DE TRAVERSE DE PLANCHE DE BORD DE VEHICULE AUTOMOBILE ET VEHICULE COMPORTANT CET AGENCEMENT**
QUERTRÄGERANORDNUNG EINES KRAFTFAHRZEUGARMATURENBRETTS UND KRAFTFAHRZEUG MIT EINER SOLCHEN ANORDNUNG
MOTOR VEHICLE DASHBOARD CROSSMEMBER ARRANGEMENT AND VEHICLE COMPRISING SUCH AN ARRANGEMENT

(30) Priorité: 05.10.2011 FR 1158975
(43) Date de publication de la demande: 13.08.2014
(73) Titulaire: Renault S.A.S., 92100 Boulogne-Billancourt (FR)
(72) Inventeur: CHEREAU, Pierre, F-78114 Magny Les Hameaux (FR)
(86) Numéro de dépôt international: PCT/FR2012/051557
(87) Numéro de publication internationale: WO 2013/050677

(56) Documents cités:
- DE-A1-102009 026 299
- JP-U- 63 054 583
- US-A- 4 355 820
- US-A- 4 682 788

## Description

La présente invention concerne un agencement de traverse de planche de bord pour véhicule automobile. Le document JP 63054583 U décrit un agencement selon le préambule de la revendication 1.

Une traverse de planche de bord traditionnelle, par exemple celle du document FR 2 914 900, est une structure allongée rigide destinée à être fixée horizontalement, transversalement à la direction longitudinale du véhicule. Elle est fixée par ses deux extrémités à la caisse du véhicule automobile, entre deux montants latéraux. L'agencement de traverse de planche de bord, c'est-à-dire la traverse de planche de bord et ses moyens de montage, peut comprendre une jambe de force sensiblement verticale pour soutenir la partie centrale de la planche, cette jambe de force étant fixée au plancher de la caisse ; le rôle de cette jambe de force est essentiellement d'améliorer le comportement vibratoire de la traverse (réduction des bruits). L'agencement de traverse de planche de bord peut aussi comprendre une liaison horizontale destinée à s'appuyer à une structure à l'avant de la caisse, en particulier à une traverse inférieure de baie de la caisse. La traverse de planche de bord est destinée à supporter des équipements, notamment la colonne de direction.

Une telle traverse de planche de bord entraîne des contraintes d'architecture de l'habitacle, notamment en ce qu'elle bloque inutilement l'espace devant le passager avant. Le but de l'invention est de libérer les contraintes d'architecture de l'habitacle en proposant un nouveau type d'agencement de traverse de planche de bord.

L'invention atteint son but grâce à un agencement de traverse de planche de bord destiné à être fixé à la caisse d'une véhicule, l'agencement comportant un élément transversal de traverse destiné à être fixé à un montant latéral d'un véhicule à une première extrémité, une béquille sensiblement verticale destinée à être fixée à son extrémité inférieure au plancher du véhicule pour soutenir l'élément transversal, et un support avant destiné à être fixé à son extrémité avant à une zone centrale de traverse de baie, l'élément transversal de traverse occupant seulement sensiblement la moitié de la largeur de l'habitacle, l'élément transversal, le support avant et la béquille étant connectés rigidement entre eux de manière à former un tripode rigide structurellement autonome sans liaison structurelle du côté du véhicule opposé au montant latéral de fixation de l'élément transversal.

Ainsi selon l'agencement de traverse de l'invention, la traverse ou plus exactement la demi-traverse se trouve seulement dans l'espace de l'habitacle du côté conducteur mais n'entrave pas du tout l'espace du côté passager. Ceci permet d'avancer considérablement la planche de bord côté passager, voire de s'en affranchir. On peut ainsi envisager des dissymétries importantes entre le côté passager et le côté conducteur. Le côté passager étant beaucoup moins contraint et limité vers l'avant, il est possible par exemple d'avancer le siège passager avant à une position beaucoup plus avancée vers la caisse, ce qui permet également d'optimiser la place pour un passager arrière situé juste derrière le passager avant.

Les trois parties constitutives sont réalisées par des pièces distinctes. Les trois parties constitutives sont connectées ensemble à un seul noeud central. De préférence, le noeud est placé par rapport aux trois parties de manière à équilibrer les efforts qui s'exercent : les trois angles formés deux à deux entre les lignes d'action des trois parties qui aboutissent au noeud sont de préférence supérieurs à 90°, par exemple compris entre 100° et 145°.

Chacune des trois parties constitutives est de préférence réalisée en acier. Avantageusement, au moins l'élément transversal et le support avant sont réalisés par des pièces tubulaires, de section polygonale, par exemple carrée, ou elliptique, par exemple circulaire. La béquille est avantageusement réalisée par un profilé métallique, par exemple un profilé en U en acier, éventuellement fermé par une tôle formant un caisson.

Le noeud est avantageusement constitué par un trièdre en acier mécano-soudé sur lequel les extrémités des trois parties constitutives du tripode sont solidarisées par soudage et/ou vissage.

Avantageusement, l'élément transversal et le support avant sont solidarisés avant leur mise en place sur le véhicule et comprennent à leur extrémité libre une pièce de montage, notamment un flasque de montage, comportant un relief de positionnement destiné à coopérer avec un relief complémentaire disposé sur la caisse du véhicule dans la zone de fixation. Il s'agit avantageusement sur la zone de fixation d'un pion pilote destiné à pénétrer dans un orifice prévu dans la pièce de montage ; il peut s'agir d'un orifice fermé et/ou d'un orifice ouvert (pour au moins l'un d'entre eux afin de faciliter le montage des deux éléments solidarisés), par exemple sous forme de lumière de guidage avec butée en bout de lumière. Avantageusement, le tube avant comporte un flasque de montage à orifice fermé coopérant avec un pion pilote orienté longitudinalement, et l'élément transversal comprend un flasque de montage à lumière horizontale de guidage coopérant avec un pion pilote orienté transversalement. Avantageusement, la béquille est fixée au noeud par des vis, ce qui permet de la fixer postérieurement au montage de l'élément transversal et du support avant.

Avantageusement, le trièdre est formé de trois platines agencées en équerre deux à deux

L'invention concerne aussi le véhicule équipé d'un tel agencement de traverse.

D'autres caractéristiques et avantages de l'invention ressortiront de la description suivante d'un exemple de réalisation. Il sera fait référence aux dessins annexés sur lesquels :
- la figure 1 est une vue en perspective de trois-quarts de la demi-traverse de l'invention dans l'environnement de la caisse et de la colonne de direction.
- la figure 2 est une en perspective de détail de trois-quarts de la demi-traverse de l'invention.
- la figure 3 est une vue de dessus de l'agencement de la figure 2.
- la figure 4 est une vue de trois-quarts vers l'arrière du noeud central de la demi-traverse conforme à l'invention.

La description se réfère à l'orientation du trièdre de référence XYZ :
X = longitudinal véhicule, dirigé vers l'arrière.
Y = transversal au véhicule, dirigé vers la droite du véhicule
Z = vertical, dirigé vers le haut.

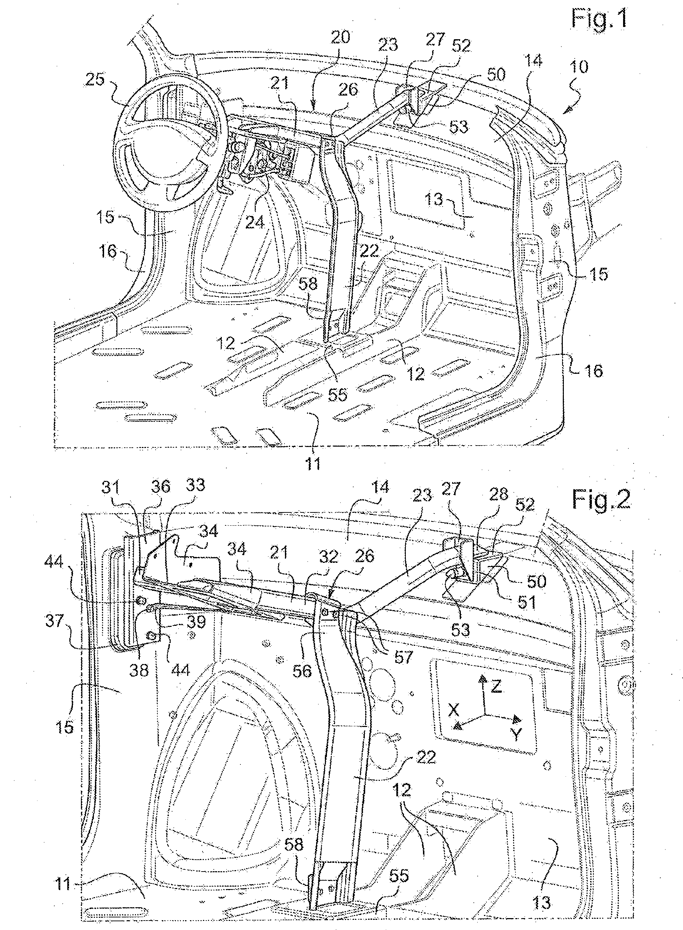

La figure 1 montre une partie de caisse 10 d'un véhicule automobile, avec un plancher 11 comprenant des profils centraux longitudinaux jumeaux 12 reliant le plancher 11 à un tablier 13 qui se termine à sa partie supérieure par une traverse inférieure de baie 14. La caisse forme à l'avant des montants latéraux ou piliers avant 15 bordant une ouverture de porte 16.

L'agencement de traverse 20 conforme à l'invention comporte un élément transversal horizontal tubulaire 21 fixé au montant latéral gauche 15 (pour une conduite à gauche), une béquille sensiblement verticale 22 fixée aux profils 12 du plancher 11, et un support tubulaire avant 23 fixé sensiblement au centre de la traverse inférieure de baie 14. Les trois éléments constitutifs 21, 22, 23 de l'agencement de traverse de l'invention sont connectés rigidement à l'endroit d'un noeud central 26 et ils forment un tripode structurel rigide orienté sensiblement parallèlement aux directions du trièdre de référence XYZ mais selon des angles légèrement plus obtus : l'élément transversal 21 est orienté dans une direction proche de la direction Y, la béquille 22 est orientée dans une direction proche de la direction Z et le support avant 23 est orienté dans une direction proche de la direction X.

L'agencement de traverse 20 supporte la colonne de direction 24 et le volant 25.

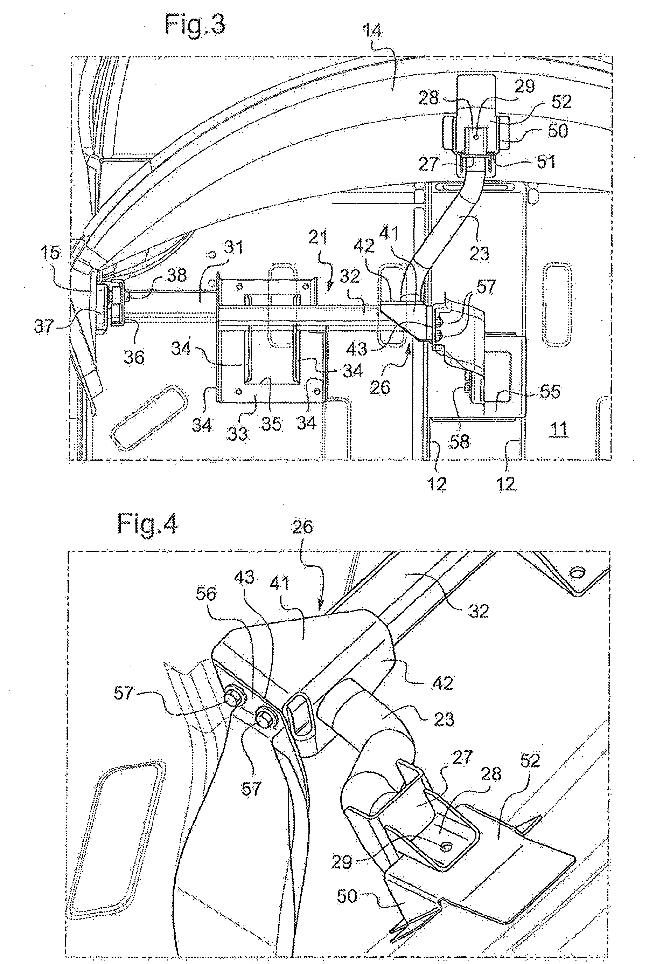

Les figures 2 et 3 montrent plus en détail la réalisation des parties de la demi-traverse de l'invention.

Compte tenu de l'environnement particulier représenté, l'élément transversal 21, qui forme la demi-traverse conforme à l'invention, est réalisé en deux tronçons mécanosoudés décalés dans la direction X, un premier tronçon 31 au voisinage du montant latéral et un second tronçon 32 du côté du noeud 26. Les deux tronçons sont avantageusement des tronçons tubulaires creux à section carrée ou rectangulaire. Le second tronçon 32 comprend une platine 33 à cornières 34 et à fenêtre 35 pour la fixation de la colonne de direction. L'extrémité libre du tronçon 32 est soudée dans le noeud 26 constitué par un trièdre à trois faces orthogonales 41, 42, 43. Le trièdre comporte typiquement trois platines agencées en équerre deux à deux. Ces platines sont typiquement pliées et/ou soudées entre elles pour former les équerres et l'ensemble du trièdre. Deux faces du tube 32 peuvent être soudées aux faces 41, 42 du noeud et son extrémité peut être soudée à l'intérieur de la face 43. Le premier tronçon 31 comprend à son extrémité de fixation un flasque de fixation 36 en U destiné à coopérer avec une platine de fixation 37 intégrée sur le montant latéral 15. La platine 37 comporte un pion pilote 38 en direction Y qui peut être guidé dans un orifice ouvert sous forme de lumière oblongue 39 horizontale (direction X) prévue dans le flasque 36 de manière à régler le positionnement en Z. La lumière 39 qui s'ouvre sur un bord vertical du flasque 36 comporte un fond de lumière servant de butée de positionnement en X pour le pion pilote 38. Des vis 44 prévues sur le flasque 36 peuvent être serrées et s'appuyer sur la platine 37 pour rattraper le jeu transversal en Y.

Le support avant 23 est un tube à section circulaire soudé sur la face 42 du noeud 26. Il a une forme en S peu marquée permettant de rattraper les différences de cotes en X, Y, Z entre le noeud 26 et la fixation sur la traverse de caisse 14 : en effet, cette fixation se fait avantageusement en position centrale de la traverse de baie 14 (et peut servir aussi bien pour une conduite à gauche que pour une conduite à droit) ; par ailleurs, la fixation est plus haute que le noeud 26 afin de mieux répartir en étoile les trois parties du tripode de l'agencement de traverse 20 et les efforts correspondants, ceci allant dans le sens de plus de raideur et moins de vibrations. La fixation comporte un dièdre de fixation 50 solidaire de la traverse de baie 14 et formant deux faces d'appui respectivement verticale 51 et horizontale 52. Un pion pilote 53 dirigé en X est fixé à la face verticale 51. L'extrémité avant du tube 23 est solidaire d'un flasque vertical de fixation 27 dont la face avant vient s'appuyer sur la face verticale 51 du dièdre de fixation 50, ce qui détermine sa position en X. La position en Y et Z du flasque 27 est déterminée par la coopération du pion pilote 53 et d'un orifice fermé correspondant non représenté formé dans le flasque 53. Par ailleurs, le flasque 27 comporte sur sa face avant un bec d'accrochage 28 dont une face horizontale vient en appui sur la face 52 du dièdre 50 ou à son voisinage immédiat et comporte un orifice 29 permettant le vissage d'une vis de fixation dans le dièdre 50 de fixation.

La béquille 22 est constituée d'un profilé dont la base est solidarisée par vissage ou soudage à une pièce de fixation horizontale 55 fixée sur les nervures verticales centrales 12 du plancher 11, par exemple au moyen d'une patte de fixation 58 découpée dans la pièce 55 et relevée. Le profilé de la béquille 22 s'élève verticalement puis oblique légèrement vers le noeud 26, l'âme 56 du profilé venant s'appuyer sur la face verticale longitudinale 43 du noeud 26 où elle peut être fixée par des vis 57.

Si x, y, z sont les coordonnées du noeud 26 dans le repère orthonormé X, Y, Z, les coordonnées des fixations des pièces 21, 22, 23 du tripode 20 de demi-traverse de planche de bord sur les éléments respectifs : montant latéral, plancher, zone centrale de traverse de baie, aux extrémités des pièces 21, 22, et 23 opposées au noeud 20, sont respectivement
x + a1 ;y+bl ;z+cl
x + a2 ; y + b2 ; z + c2
x + a3 ; y + b3 ; z + c3
où
a1 est nul ou positif et de faible valeur
b1 est négatif et d'une valeur légèrement inférieure à la moitié de la largeur de l'habitacle
c1 est nul ou positif et de faible valeur
a2 est nul ou positif et de faible valeur
b2 positif et de faible valeur
c2 est négatif et d'une valeur relativement importante représentant la hauteur du noeud au-dessus du plancher
a3 est négatif et d'une valeur relativement importante représentant la distance du noeud à la traverse inférieure de baie
b3 est positif et de faible valeur
c3 est positif et de faible valeur.

De cette manière le noeud 26 se trouve bien équilibré au sein du tripode de l'agencement de traverse 20 et on obtient des angles des lignes d'action des trois parties, 21-22, 22-23 et 23-21, qui sont supérieurs à 90°.

L'agencement de traverse de planche de bord conforme à l'invention est particulièrement intéressant pour satisfaire les recommandations européennes ECE 21 déterminées par l'UNECE concernant les prescriptions relatives à l'homologation des véhicules en ce qui concerne leur aménagement intérieur. Cette réglementation prescrit par exemple que dans une zone proche du passager avant, aucun obstacle ne doit avoir une arête vive : c'est la raison pour laquelle on trouve des formes bombées et du coup parfois proéminentes sur les planches de bord classiques. Selon l'agencement de l'invention, on peut mettre la planche de bord en dehors de la zone de référence définie dans la réglementation, d'où un gain de place et de sécurité encore plus remarquable.

## Revendications

1. Agencement (20) de traverse de planche de bord, destiné à être fixé à la caisse d'une véhicule, l'agencement comportant un élément transversal (21) de traverse destiné à être fixé à un montant latéral (15) d'un véhicule à une première extrémité, une béquille (22) sensiblement verticale destinée à être fixée à son extrémité inférieure au plancher (11) du véhicule pour soutenir l'élément transversal (21), et un support avant (23) destiné à être fixé à son extrémité avant à une zone centrale de traverse de baie (14), l'élément transversal (21) de traverse occupant sensiblement seulement la moitié de la largeur de l'habitacle, cet élément transversal (21), le support avant (23) et la béquille (22) étant connectés rigidement entre eux de manière à former un tripode rigide structurellement autonome sans liaison structurelle du côté du véhicule opposé au montant latéral de fixation de l'élément transversal, **caractérisé en ce que** les trois parties constitutives (21, 22, 23) sont réalisées par des pièces distinctes rigidement connectées ensemble à un seul noeud central (26).

2. Agencement (20) selon la revendication 1, **caractérisée en ce que** le noeud (26) est placé par rapport aux trois parties (21, 22, 23) de manière que les trois angles formés deux à deux entre les lignes d'action des trois parties (21, 22, 23) qui aboutissent au noeud soient supérieurs à 90°.

3. Agencement (20) selon l'une quelconque des revendications 1 ou 2, **caractérisée en ce que** le noeud (26) est constitué par un trièdre sur lequel les extrémités des trois parties constitutives (21, 22, 23) de l'agencement (20) sont solidarisées par soudage et/ou vissage.

4. Agencement (20) selon l'une quelconque des revendications 1 à 3, **caractérisée en ce que** l'élément transversal (21) et le support avant (23) sont solidarisés avant leur mise en place sur le véhicule et comprennent à leur extrémité libre une pièce de montage (36, 27) comportant un relief de positionnement (39) destiné à coopérer avec un relief complémentaire (38, 53) disposé sur la caisse du véhicule dans la zone de fixation.

5. Agencement (20) selon la revendication 4, **caractérisée en ce que** la pièce de montage (36, 27) comprend un orifice (39) destiné à coopérer avec un pion pilote (38, 53) prévu sur la caisse du véhicule.

6. Agencement (20) selon l'une quelconque des revendications 1 à 4, **caractérisée en ce que** la béquille (22) est fixée au noeud (26) par des vis.

7. Agencement (20) selon l'une quelconque des revendications 1 à 5, **caractérisée en ce que** chacune des trois parties constitutives (21, 22, 23) est réalisée en acier.

8. Agencement (20) selon l'une quelconque des revendications 1 à 6 **caractérisée en ce qu'**au moins l'élément transversal (21) et le support avant (23) sont réalisés par des pièces tubulaires.

9. Agencement (20) selon la revendication 3, **caractérisé en ce que** le trièdre est formé de trois platines agencées en équerre deux à deux.

10. Véhicule comprenant une caisse et un agencement de traverse de planche de bord, destiné à être fixé à la caisse d'une véhicule, **caractérisé en ce que** l'agencement de traverse (20) est conforme à l'une quelconque des revendications 1 à 9.

## Patentansprüche

1. Querträgeranordnung (20) eines Armaturenbretts, welche dafür vorgesehen ist, an der Karosserie eines Fahrzeugs befestigt zu werden, wobei die Anordnung ein Querträger-Querelement (21), welches dafür vorgesehen ist, an einem ersten Ende an einer seitlichen Strebe (15) eines Fahrzeugs befestigt zu werden, eine im Wesentlichen senkrechte Stütze (22), welche dafür vorgesehen ist, an ihrem unteren Ende am Boden (11) des Fahrzeugs befestigt zu werden, um das Querträger-Querelement (21) zu stützen, und einen vorderen Träger (23) aufweist, welcher dafür vorgesehen ist, mit seinem vorderen Ende an einer zentralen Zone eines Querträgers (14) befestigt zu werden, wobei das Querträger-Querelement (21) im Wesentlichen nur die Hälfte der Breite des Insassenraums einnimmt, wobei dieses Querelement (21), der vordere Träger (23) und die Stütze (22) miteinander derartig starr verbunden sind, dass ein strukturell autonomes, starres Dreibein ohne strukturelle Verbindung zu der von der seitlichen Strebe zur Befestigung des Querelements gegenüberliegenden Seite des Fahrzeugs gebildet wird, **dadurch gekennzeichnet, dass** die drei konstitutiven Teile (21, 22, 23) aus verschiedenen Teilen ausgeführt sind, welche starr miteinander in einem einzigen zentralen Knotenpunkt (26) verbunden sind.

2. Anordnung (20) nach Anspruch 1, **dadurch gekennzeichnet, dass** der Knotenpunkt (26) in Bezug auf die drei Teile (21, 22, 23) derartig angeordnet ist, dass die drei paarweise zwischen den Wirkungslinien der drei Teile (21, 22, 23), welche zum Knotenpunkt verlaufen, gebildeten Winkel größer als 90° sind.

3. Anordnung (20) nach einem der Ansprüche 1 oder 2, **dadurch gekennzeichnet, dass** der Knotenpunkt (26) von einem Trieder gebildet wird, an welchem die Enden der drei konstitutiven Teile (21, 22, 23) der Anordnung (20) durch Schweißung und/oder Verschraubung fest verbunden sind.

4. Anordnung (20) nach einem der Ansprüche 1 bis 3, **dadurch gekennzeichnet, dass** das Querelement (21) und der vordere Träger (23) vor ihrem Einsetzen in das Fahrzeug fest verbunden werden und an ihrem freien Ende ein Montageteil (36, 27) aufweisen, welches ein Positionierrelief (39) aufweist, welches dafür vorgesehen ist, mit einem an der Karosserie des Fahrzeugs in der Befestigungszone angeordneten komplementären Relief (38, 53) zusammenzuwirken.

5. Anordnung (20) nach Anspruch 4, **dadurch gekennzeichnet, dass** das Montageteil (36, 27) eine Öffnung (39) aufweist, welche dafür vorgesehen ist, mit einem an der Karosserie des Fahrzeugs vorgesehenen Steuerzapfen (38, 53) zusammenzuwirken.

6. Anordnung (20) nach einem der Ansprüche 1 bis 4, **dadurch gekennzeichnet, dass** die Stütze (22) durch Schrauben am Knotenpunkt (26) befestigt ist.

7. Anordnung (20) nach einem der Ansprüche 1 bis 5, **dadurch gekennzeichnet, dass** jedes der drei konstitutiven Teile (21, 22, 23) aus Stahl hergestellt ist.

8. Anordnung (20) nach einem der Ansprüche 1 bis 6, **dadurch gekennzeichnet, dass** mindestens das Querelement (21) und der vordere Träger (23) aus rohrförmigen Teilen hergestellt sind.

9. Anordnung (20) nach Anspruch 3, **dadurch gekennzeichnet, dass** der Trieder aus drei, paarweise im Winkel angeordneten Platten gebildet wird.

10. Fahrzeug umfassend eine Karosserie und eine Querträgeranordnung eines Armaturenbretts, welche dafür vorgesehen ist, an der Karosserie eines Fahrzeugs befestigt zu werden, **dadurch gekennzeichnet, dass** die Querträgeranordnung (20) einer Anordnung nach einem der Ansprüche 1 bis 9 entspricht.

## Claims

1. Dashboard crossmember arrangement (20) intended to be fixed to the body shell of a vehicle, the arrangement comprising a crossmember transverse element (21) intended to be fixed to a lateral upright (15) of a vehicle at a first end, a substantially vertical prop (22) intended to be fixed at its lower end to the floor (11) of the vehicle in order to support the transverse element (21), and a front support (23) intended to be fixed at its front end to a central zone of a window opening crossmember (14), the crossmember transverse element (21) occupying substantially only half the width of the cabin, this transverse element (21), the front support (23) and the prop (22) being connected rigidly to one another so as to form a structurally autonomous rigid tripod with no structural connection on the opposite side of the vehicle to the lateral upright to which the transverse element is fixed, **characterized in that** the three constituent parts (21, 22, 23) are produced as distinct components rigidly connected together at a single central node (26).

2. Arrangement (20) according to Claim 1, **characterized in that** the node (26) is positioned with respect to the three parts (21, 22, 23) in such a way that the three angles formed in pairs between the lines of action of the three parts (21, 22, 23) which end at the node are greater than 90°.

3. Arrangement (20) according to either one of Claims 1 and 2, **characterized in that** the node (26) consists of a trihedron to which the ends of the three constituent parts (21, 22, 23) of the arrangement (20) are secured by welding and/or screwing.

4. Arrangement (20) according to any one of claims 1 to 3, **characterized in that** the transverse element (21) and the front support (23) are joined together before being installed in the vehicle and at their free end comprise a mounting piece (36, 27) comprising a positioning relief (39) intended to collaborate with a complementary relief (38, 53) arranged on the body shell of the vehicle in the fixing zone.

5. Arrangement (20) according to Claim 4, **characterized in that** the mounting piece (36, 27) comprises an orifice (39) intended to collaborate with a pilot stud (38, 53) provided on the body shell of the vehicle.

6. Arrangement (20) according to any one of Claims 1 to 4, **characterized in that** the prop (22) is fixed to the node (26) by screws.

7. Arrangement (20) according to any one of Claims 1 to 5, **characterized in that** each of the three constituent parts (21, 22, 23) is made of steel.

8. Arrangement (20) according to any one of Claims 1 to 6, **characterized in that** at least the transverse element (21) and the front support (23) are produced as tubular components.

9. Arrangement (20) according to Claim 3, **characterized in that** the trihedron is formed of three mounting plates arranged such that each pair forms a right angle.

10. Vehicle comprising a body shell and a dashboard crossmember arrangement intended to be fixed to the body shell of a vehicle, **characterized in that** the crossmember arrangement (20) is according to any one of Claims 1 to 9.
